# EUROPÄISCHE PATENTSCHRIFT

(11) **EP 2 851 488 B1**
(45) Veröffentlichungstag und Bekanntmachung des Hinweises auf die Patenterteilung: **08.11.2017**
(21) Anmeldenummer: 14184079.3
(22) Anmeldetag: 09.09.2014
(51) Int. Cl.: E04G 15/06, F16L 5/12

(54) **Verfahren zum Herstellen eines Wand- oder Bodenelements und Verwendung eines Aufsetzstücks in einem solchen Verfahren**
A method of manufacturing a wall or floor element and the use of an attachment part in such a method
Procédé de fabrication d'un élément de sol ou de paroi et l'utilisation d'un élément de pose dans un tel procédé

(30) Priorität: 19.09.2013 DE 102013015502
(43) Veröffentlichungstag der Anmeldung: 25.03.2015
(73) Patentinhaber: Hauff-Technik GmbH & Co. KG, 89568 Hermaringen (DE)
(72) Erfinder: Kurz, Ralf, 89537 Giengen (DE); Scheuring, Horst, 89182 Bernstadt (DE)
(74) Vertreter: König Szynka Tilmann von Renesse Patentanwälte Partnerschaft mbB

(56) Entgegenhaltungen:
- EP-A1- 2 511 580
- DE-A1- 3 527 220
- DE-B1- 2 901 268
- DE-B4- 10 346 463
- GB-A- 2 475 238

## Beschreibung

Die vorliegende Erfindung betrifft ein Verfahren zum Herstellen eines Wand-oder Bodenelements durch Gießen von zunächst fließfähigem und dann erstarrendem Material,wobei vor dem Gießen eine Leitungsanordnung hergestellt wird. Weiter betrifft die vorliegende Erfindung eine Verwendung eines Aufsetzstücks, das einen Kontaktabschnitt und einen Freihalteabschnitt aufweist, mit einem Einsetzstück in dem erfindungsgemäßen Verfahren. Die "Leitung" ist eine Rohrleitung, insbesondere richtet sich die Erfindung auf sogenannte Kanalgrundrohre. Um ein solches KG-Rohr beim Bau eines Gebäudes durch beispielsweise eine Betonwand zu führen, sind aus dem Stand der Technik Doppelmuffen bekannt, also Rohrstücke mit bezogen auf die Leitungsrichtung beiderends jeweils einer Muffe. Ein solches Doppelmuffenstück wird dann vor dem Betonieren des Wandelements in die Schalung gesetzt, sodass also die beiden endseitigen Muffen innenseitig an den Schalungselementen anliegen und nach dem Gießen des Wandelements an dessen entgegengesetzten Wandflächen angeordnet sind. Dies soll das Anwendungsgebiet illustrieren, die nachstehend erläuterte Erfindung jedoch nicht in ihrer Allgemeinheit beschränken.

Aus der EP 2 511 580 A1 und der DE 103 46 463 B4 sind Durchführungen zum Einbetonieren in eine Wand bekannt, wobei ein Rohrelement der Durchführung dann eine Durchgangsöffnung in der Wand freihält, durch welche eine Leitung hindurchgeführt werden kann.

Aus der gattungsbildenden DE 29 01 268 B1 ist eine Durchführung mit einem Aufsetzstück bekannt, das auf ein einzubetonierendes Futterrohr gesetzt und an einer Schalung befestigt wird. In das Aufsetzstück ist ein Deckel eingeschraubt.

Die DE 35 27 220 A1 betrifft eine Kombination aus Aufsetz- und Einsetzstück, die auf ein einzubetonierendes Rohrstück gesetzt wird. Das Aufsetzstück wird wiederum über einen Montageflansch durch Vernageln an der Schalung befestigt. Die DE 35 27 220 A1 offenbart die meisten Verfahrensschritte des Anspruchs 1, wobei sich das Verfahren des Anspruchs 1 von diesem Dokument im Wesentlichen darin unterscheidet, dass der Kontaktabschnitt mit einem Spannmittel auf die Leitungsaußenfläche angedrückt wird. Die GB 2 475 238 A betrifft eine flexible Hülse, die auf ein durch eine Stahlwand geführtes Rohr gesetzt wird.

Der vorliegenden Erfindung liegt das technische Problem zugrunde, ein vorteilhaftes Verfahren zum Herstellen eines Wand- oder Bodenelements anzugeben.

Erfindungsgemäß löst diese Aufgabe ein Verfahren gemäß dem Hauptanspruch.

Nach dem Vergießen, also nachdem das zunächst fließfähige Material zumindest teilweise erstarrt ist, wird das Einsetzstück aus dem Abstandsvolumen genommen werden und ist ein entsprechend endseitiger Bereich der Leitung zugänglich, nämlich die das Abstandsvolumen mit begrenzende Leitungsaußenfläche. Um auf das eingangs genannte Beispiel zurückzukommen: Durch die Verwendung des Aufsetzstücks kann anstelle einer Doppelmuffe ein einfaches Rohrstück mit einer Muffe an dem einen und einem Spitzende am entgegengesetzten Ende baulich in das Wand- oder Bodenelement integriert werden; wird das Aufsetzstück nämlich am Spitzende angeordnet, kann nach Herausnahme des Einsetzstücks ein normales Rohrstück mit einer Muffe aufgeschoben werden. Der Verbindungsbereich zwischen dem baulich in das Wand- oder Bodenelement integrierten Rohrstück und dem aufgeschobenen Rohrstück liegt dann also innerhalb des Wand- oder Bodenelements, wobei im Gegensatz zum Stand der Technik "Doppelmuffe" das zur Verlängerung vorgesehene Rohrstück nicht ein- sondern aufgeschoben wird.

Die erfindungsgemäße Neuerung kann zunächst schon insoweit vorteilhaft sein, als für das Vergießen im Wand- oder Bodenelement kein Sonderbauteil vorgesehen werden muss, sondern eben beispielsweise auch ein gewöhnliches Rohrstück mit Muffe und Spitzende Anwendung finden kann (im Folgenden als "Rohrstück" bezeichnet). Neben einer im Allgemeinen besseren Verfügbarkeit auf der Baustelle kann das Vorsehen eines Rohrstücks auch insoweit vorteilhaft sein, als es eine gewisse Anpassung an die Dicke des Wand- oder Bodenelements erlaubt; es kann nämlich vom Spitzende her abgelängt und so an eine geringere Wand- oder Bodendicke angepasst werden. Der Erfinder hat die Beobachtung gemacht, dass es in der Praxis Abweichungen beim Verschalen geben kann, was zur Folge hat, dass die in ihrer jeweiligen Länge festgelegten Doppelmuffen gelegentlich nicht genau passen.

Weiterhin hat der Erfinder festgestellt, dass eine Doppelmuffe auch ungeachtet dieser Probleme bei der Dickenanpassung nachteilig sein kann, weil sie nämlich insbesondere im Falle des bevorzugten Anwendungsgebiets "KG-Rohr" verschmutzungs- bzw. verstopfungsträchtig ist. Es ist nämlich immer ein Spitzende der Fließrichtung des Abwasserstroms entgegengesetzt, was zur Ablagerung von mitgeführten Fest- und insbesondere Faserstoffen führen kann.

Die Vorteile des Aufsetzstücks sind in dem erfindungsgemäßen Verfahren nach Anspruch 1 ersichtlich. Kein Gegenstand der Erfindung ist eine "Leitungsanordnung", also eine Leitung mit entsprechend aufgesetztem Aufsetzstück (Situation beim Vergießen, aber auch im fertiggestellten Wand- oder Bodenelement) bzw. ggfs. auch in das Abstandsvolumen eingesetzten Einsetzstück (Situation beim Vergießen und vor dem Anschließen einer Verlängerung). Soweit Aufsetz- und Einsetzstück also für eine bestimmte Anordnung an der Leitung bzw. Anlage auf der Leitungsaußenfläche ausgelegt sind, ist bei der Leitungsanordnung eine entsprechende Anordnung/Anlage tatsächlich gegeben. Das Aufsetzstück weist ein Einsetzstück auf und wird beim Vergießen von diesem stabilisiert, insbesondere gegen ein Zusammendrücken hinsichtlich der Abstandsrichtungen (der den Abstand zur Mittenachse der Leitung bestimmenden, im Falle einer Kreisgeometrie radialen Richtungen). Ein Vorteil des Aufsetzstücks mit stabilisierendem Einsetzstück kann etwa darin bestehen, dass ersteres (aufgrund der Stabilisierung) aus einem weichen Material vorgesehen werden kann, etwa aus einem im Vergleich zu einem KG-Rohr aus Polyvinylchlorid (PVC-U) weicheren Material, also einem Material geringerer Shore-Härte.

Für das Aufsetzstück kann beispielsweise eine Shore-Härte von höchstens 70 Shore, in dieser Reihenfolge zunehmend bevorzugt höchstens 65 Shore, 60 Shore, 57,5 Shore, bevorzugt sein (mögliche Untergrenzen können beispielsweise bei 40 Shore, 45 Shore bzw. 50 Shore liegen). Ein entsprechend weiches Aufsetzstück kann beispielsweise schon bei der Montage Vorteile bieten, weil es sich nämlich ggfs. leichter auf die Leitung aufziehen lässt. Zudem kann, etwa wenn das Wand- oder Bodenelement betoniert wird, der dann erstarrte Beton an einem weichen Aufsatzstück auch besser anliegen, weil letzteres beim Schrumpfen des Betons ein Stück weit nachgeben, sich also mit dem schrumpfenden Beton bewegen kann.

Auch unabhängig von der spezifischen Shore-Härte wird das Aufsetzstück bei einer bevorzugten Ausführungsform aus Gummimaterial vorgesehen, besonders bevorzugt aus synthetischem Gummimaterial, auch aufgrund dessen elastischer Materialeigenschaften. Das vorzugsweise synthetische Gummimaterial kann beispielsweise auf der Basis von synthetischem Kautschuk hergestellt sein.

Das Aufsetzstück kann beispielsweise durch Pressen von synthetischem Gummimaterial in einer Form und Vulkanisieren desselben in der Form hergestellt werden. Der Form wird vorzugsweise bei Raumtemperatur fließfähiges, das heißt mit bestimmter Viskosität flüssiges, synthetisch hergestelltes Kautschukmaterial zugeführt, das dann in der Form gepresst wird, etwa bei einem Druck von mindestens 80 bar, weiter bevorzugt mindestens 90 bar bzw. 95 bar, und von (von den Untergrenzen unabhängig) höchstens 120 bar, weiter bevorzugt höchstens 110 bar bzw. 105 bar. Die Temperatur beim Pressen liegt über der Raumtemperatur, insbesondere bei mindestens 170 °C, weiter bevorzugt bei mindestens 180 °C bzw. 190 °C; als (davon unabhängig) Maximaltemperatur sind 210 °C bevorzugt und sind 200 °C weiter bevorzugt. Generell kann das synthetische Kautschukmaterial beispielsweise Styrol, Butadien, Styrolacrylat, Reinacrylat bzw. Vinylacetat als Bestandteil aufweisen.

Im Folgenden werden zunächst weitere Ausgestaltungen des Einsetzstückes und anschließend zusätzliche Aufsetzstück-Varianten beschrieben.

Soweit das Einsetzstück im Allgemeinen auch einstückig mit dem Aufsetzstück vorgesehen sein kann, beispielsweise über eine bzw. mehrere dann zum Herausnehmen auftrennbare Materialbrücken damit verbunden, sind die beiden vorzugsweise zweistückig, ist das Einsetzstück also ein gesondertes Teil aus weiter bevorzugt einem anderen Material. So kann das Aufsetzstück nämlich beispielsweise hinsichtlich einer dichtenden Anlage auf der Leitungsaußenfläche und das Einsetzstück seine Stabilisierungsfunktion betreffend optimiert werden.

Neben der Stabilisierungsfunktion kann das Einsetzstück auch nach dem Vergie-ßen Vorteile bieten, weil beispielsweise ein Spitzende bis zur tatsächlichen Verlängerung durch Aufschieben eines Rohrstücks geschützt bleibt. Es kann einer Verschmutzung vorgebeugt werden.

Vorzugsweise wird das Einsetzstück als Schaumstoffteil vorgesehen, besonders bevorzugt aus Polystyrolschaumstoff, was gute Stabilisierungseigenschaften bei zugleich geringem Gewicht ermöglichen kann. Generell und insbesondere auch zur Erhöhung der Stabilität eines als Schaumstoffteil vorgesehenen Einsetzstückes ist dieses vorzugsweise als durchgehender Vollkörper vorgesehen, also als hinsichtlich des Abstandsvolumens durchgehender Vollkörper (in dem selbstverständlich mittig eine Ausnehmung für die Leitung vorgesehen ist). Das Einsetzstück muss das Abstandsvolumen dabei nicht notwendigerweise vollständig ausfüllen; "durchgehend" bezieht sich insoweit auf ein sich als Vollkörper von der Leitungsaußenfläche zum Aufsetzstück hin erstreckendes Einsetzstück.

Vorzugsweise ist das Einsetzstück (zusätzlich oder auch unabhängig von der in Abstandsrichtung durchgehenden Ausgestaltung) hinsichtlich der Umlaufrichtung, die einen Umlauf um die Mittenachse der Leitung betrifft, durchgehend vorgesehen, also nicht von sich in Leitungs- und Abstandsrichtung erstreckenden Trennflächen unterbrochen.

Generell kann ein Einsetzstück mit einem einstückig damit ausgebildeten Deckel bevorzugt sein, der bei aufgesetztem Aufsetz- und eingesetztem Einsetzstück Leitungsende und Abstandsvolumen abdeckt; in Leitungsrichtung auf das Ende der Leitung blickend würde also der Deckel Leitungsende und Abstandsvolumen verdecken. Die dem Leitungsende entgegengesetzte Seite des Deckels kann dann bei der Montage der zu vergießenden Leitung an der Schalung anliegen und dem Eindringen von beispielsweise Beton in sowohl Abstandsvolumen als auch Leitung vorbeugen.

Generell kann ein solcher Deckel beispielsweise auch an einem nicht in vorstehend beschriebener Weise als Vollkörper vorgesehenem Einsatzstück vorgesehen sein. Im einfachsten Fall kann ein Einsatzstück nämlich lediglich auch eine vergleichsweise dünnwandige Hülse sein, die an einer der Leitungsaußenfläche gegenüberliegenden Aufsetzstückinnenfläche anliegt und diese von der Leitungsaußenfläche beabstandet hält. Eine solche Hülse könnte endseitig auch mit einem Deckel versehen sein, also ein in einer die Leitungsrichtung beinhaltende Schnittebene betrachtet ein U-förmiges Profil haben. Besonders bevorzugt ist indes ein vorstehend erläuterter Vollkörper mit einem Deckel versehen.

In bevorzugter Ausgestaltung kann innenseitig am Deckel, also an der zur Anlage an der Leitung vorgesehenen Seite davon, eine umlaufende Nut vorgesehen sein. In diese kann dann ein als Leitung vorgesehenes Rohr ein Stück weit eingeschoben werden (bzw. kann das Einsetzstück entsprechend aufgeschoben werden); jedenfalls sitzt das Ende des Rohres dann in der Nut und ist das Einsetzstück so sicher gehalten. Die Nut soll sich also in Längsrichtung erstrecken; es kann beispielsweise die in Längsrichtung genommene Dicke des Deckels im Bereich der Nut verringert sein. Vorzugsweise geht die bezogen auf die Abstandsrichtung der Nut äußere Flanke direkt in eine dann an der Leitung anliegende Innenfläche des Einsetzstücks über. Das Aufsetzstück mit Einsetzstück ist zum Aufsetzen auf eine bestimmte Leitung vorgesehen, also auf deren Außendurchmesser angepasst; "Durchmesser" soll im Rahmen dieser Offenbarung nicht zwingend eine Kreisgeometrie implizieren, sondern ist im Allgemeinen auf den Mittelwert aus kürzester und längster Erstreckung zu lesen, der im bevorzugten Fall der Kreisgeometrie dem Kreisdurchmesser entspricht.

Bevorzugte Ausführungsformen betreffen insoweit ein Aufsetzstück, das im Bereich des Kontaktabschnitts einen Innendurchmesser von ca. 110 mm, 125 mm oder 160 mm hat, also für ein entsprechendes KG-Rohr DN 100, DN 125 oder DN 150 vorgesehen ist. Bevorzugt sind also Aufsetzstückinnendurchmesser (im Kontaktbereich), die in etwa auf gängige KG-Rohr-Außendurchmesser abgestimmt sind. Die Abweichung ("ca.") soll dabei beispielsweise nicht mehr als 5 %, 3 % bzw. 1 % betragen.

Gleichermaßen ist idealerweise auch ein als Vollkörper vorgesehenes Einsetzstück auf den Leitungsaußendurchmesser abgestimmt (hinsichtlich seines Innendurchmessers) und sollen die eben offenbarten Werte auch den Einsetzstück-Innendurchmesser betreffend offenbart sein. Besonders bevorzugt entspricht der Innendurchmesser eines Vollkörper-Einsetzstücks näherungsweise, also etwa um nicht mehr als 5 %, 3 % bzw. 1 % abweichend, dem Innendurchmesser des Aufsetzstücks im Kontaktbereich.

Der Freihalteabschnitt und der Kontaktabschnitt des Aufsetzstücks schließen in Leitungsrichtung aneinander an. Generell kann bezogen auf die Leitungsrichtung eine gewisse Mindesterstreckung des Freihalteabschnitts bevorzugt sein, also des Bereichs in dem das Aufsetzstück einen entsprechend größeren Innendurchmesser als im Kontaktabschnitt hat; der Freihalteabschnitt kann sich in Leitungsrichtung beispielsweise über mindestens 20 %, 40 % bzw. 60 % der in Leitungsrichtung genommenen Länge des Aufsetzstücks erstrecken. Der Freiheitabschnitt kann sich beispielsweise über mindestens 3 cm, 5 cm, 7 cm, 8 cm, 9 cm bzw. 10 cm erstrecken. Im Allgemeinen kann der Innendurchmesser im Freihalteabschnitt auch veränderlich sein; vorzugsweise ist er zumindest an dem dem Kontaktabschnitt entgegengesetzten Ende des Freihalteabschnitts konstant und beziehen sich die eben genannten Angaben besonders bevorzugt auf den Abschnitt konstanten Durchmessers.

Für die Innendurchmesser von Freihalteabschnitt und Kontaktabschnitt kann ein Mindestverhältnis bevorzugt sein, etwa von in dieser Reihenfolge zunehmend bevorzugt mindestens 1,05, 1,1, 1,15, 1,2 bzw. 1,25. Der AufsetzstückInnendurchmesser kann im Freihalteabschnitt beispielsweise um mindestens 0,5 cm, 1 cm, 1,5 cm, 2 cm bzw. 2,5 cm größer als jener im Kontaktabschnitt sein. Egal ob relativ oder absolut werden vorzugsweise jeweils zwei Bereiche konstanten Durchmessers verglichen; ein jeweiliger (Vergleichs)Bereich im Freihalteabschnitt bzw. Kontaktabschnitt kann sich beispielsweise über mindestens 5 %, 10 % bzw. 15 % der Länge des Aufsetzstücks erstrecken bzw. über mindestens 2 cm, 4 cm bzw. 5 cm.

Das eingangs genannte Gummimaterial ist insbesondere im Falle eines monolithischen Aufsetzstücks bevorzugt, also eines Aufsetzstücks aus von beispielsweise darin statistisch zufallsverteilten Partikeln abgesehen einem durchgehenden Material. Ein monolithisches Aufsetzstück kann generell bevorzugt sein. "Monolithisch" meint durchgehend ohne Materialgrenze (zu einem anderen Material oder einem Materialabschnitt anderer Herstellungsgeschichte).

Eine andere Aufsetzstückvariante betrifft ein aus mindestens zwei unterschiedlichen Materialien vorgesehenes, jedoch vorzugsweise einstückiges Aufsetzstück. Dabei bildet ein erstes formgebendes Formmaterial den Freihalteabschnitt und ein zweites, im Vergleich zum Formmaterial weicheres Dichtmaterial zumindest die für die Anlage auf der Leitung vorgesehene Dichtfläche des Kontaktabschnitts. Das "weichere" Dichtmaterial kann beispielsweise eine geringere Shore-Härte, ein geringeres Elastizitätsmodul und/oder eine geringere mechanische Fließspannung als das Formmaterial haben. Sämtliche vorstehend für das Aufsetzstück im Allgemeinen erläuterten Merkmale, etwa die Längen- bzw. Weitenangaben, sollen explizit auch hinsichtlich dieser Aufsetzstückvariante offenbart sein.

Bei einer bevorzugten Weiterbildung erstreckt sich das Formmaterial vom Freihalteabschnitt (mit dort größerem Innendurchmesser) bis in den Kontaktabschnitt mit in diesem Formmaterial-Kontaktabschnitt kleineren Innendurchmesser. Innenseitig des Formmaterial-Kontaktabschnitts ist dabei vorzugsweise in Umlaufrichtung durchgehend das Dichtmaterial angeordnet, und zwar flächig am Formmaterial-Kontaktabschnitt anliegend; "flächig" kann hinsichtlich der Leitungsrichtung eine Bedeckung von mindestens 2 %, 5 % bzw. 10 % der Aufsetzstück-Länge meinen (die entsprechende Flächigkeit ergibt sich mit dem Umlauf). Die "flächige" Bedeckung kann sich in Leitungsrichtung beispielsweise über mindestens 1 cm bzw. 2 cm erstrecken. Innenseitig, also dem Formmaterial-Kontaktabschnitt entgegengesetzt, kann das Dichtmaterial beispielsweise für eine im selben Sinn flächige Anlage an der Leitung ausgelegt sein. Dies soll selbstverständlich nicht das Vorhandensein einer an dieser Anlagefläche ausgebildeten, innenseitig umlaufenden Erhebung ausschließen; eine solche, insbesondere eine sich nach innen erhebende Dichtlippe, kann sogar bevorzugt sein.

Weiter bevorzugt umgreift das Dichtmaterial ein dem Freihalteabschnitt entgegengesetztes Ende des Formmaterial-Kontaktabschnitts und erstreckt es sich auch ein Stück weit außenseitig (bezogen auf die Abstandsrichtungen) am Formmaterial-Kontaktabschnitt, beispielsweise in Leitungsrichtung über mindestens 5 % bzw. 10 % der Aufsetzstück-Länge bzw. über mindestens 1 cm bzw. 2 cm. Auf einem solchen, sich außenseitig des Formmaterial-Kontaktabschnitts erstreckenden Dichtmaterial-Abschnitt wird dann erfindungsgemäß ein Spannmittel zum Anpressen des Kontaktabschnitts auf die Leitung angeordnet, etwa ein Kabelbinder und insbesondere eine Spannschelle. Ein solches Spannmittel ist erfindungsgemäß unabhängig von der eben diskutierten Aufsetzstück-Variante.

Das aus mindestens zwei Materialien vorgesehene Aufsetzstück wird vorzugsweise in einem zwei Komponenten-Spritzgussverfahren hergestellt, wobei weiter bevorzugt in einem ersten Schritt das Formmaterial und in einem zweiten das Dichtmaterial spritzgegossen wird. Das Dichtmaterial wird bzw. ist also an das Formmaterial angeformt. Generell kann am Aufsetzstück in bevorzugter Ausgestaltung eine sich von der übrigen Außenfläche weg erhebende, idealerweise durchgehend umlaufende Stegdichtung vorgesehen sein, beispielsweise eine sich von der übrigen (unmittelbar benachbarten) Außenfläche um mindestens 0,5 cm, 1 cm bzw. 1,5 cm weg erhebende Stegdichtung. Vorzugsweise ist die Stegdichtung im Bereich des Freihalteabschnitts angeordnet, besonders bevorzugt in den mittleren 80 %, 70 %, 60 % bzw. 50 % davon (bezogen auf die Länge in Leitungsrichtung). Bevorzugt kann auch eine Mehrzahl Stegdichtungen sein, mindestens zwei bzw. drei Stegdichtungen.

Nochmals zu der "Einstückigkeit" bzw. "monolithischen" Ausgestaltung: Generell ist ein einstückiges Aufsetzstück bevorzugt, welches entweder monolithisch sein oder auch aus zwei unterschiedlichen, aneinander angeformten Materialien vorgesehen sein kann. Insoweit meint "einstückig" also beispielsweise gemeinsam oder im Gesamten in einem formenden Verfahren hergestellt, also zumindest aneinander angeformt oder in einem einzigen Schritt geformt.

Im Falle eines monolithischen Aufsetzstücks ist die Stegdichtung vorzugsweise monolithisch damit, also etwa im selben Schritt durch Pressen hergestellt. Im Falle des aus mindestens zwei Materialien vorgesehenen Aufsetzstücks ist die Stegdichtung vorzugsweise einstückig damit; besonders bevorzugt ist sie an den Formmaterial-Freihalteabschnitt angeformt, idealerweise im Zweikomponenten-Spritzgussverfahren und weiter bevorzugt in demselben Schritt mit dem Dichtmaterial aus demselben Material (was generell bevorzugt ist). Für das Dichtmaterial und/oder die Stegdichtung kann ein thermoplastischer Elastomer bevorzugt sein.

In dem erfindungsgemäßen Verfahren kommt eine Leitungsanordnung zur Anwendung, also eine Leitung mit aufgesetztem Aufsetzstück und eingesetztem Einsetzstück. Die "Leitung" ist eine Rohrleitung, also ein medienführendes Hohlrohr, insbesondere ein KG-Rohr. Die "Leitung", auf welche das Aufsetzstück gesetzt wird, ist die medienführende Leitung selbst; eine der Leitungsaußenfläche entgegengesetzte Leitungsinnenfläche ist also dazu vorgesehen, direkt das entsprechende Medium zu führen. Dabei kann die Leitung im Allgemeinen durchaus aus mehr als einem Material aufgebaut sein, etwa eine außenseitige Isolierung aufweisen, soll sie jedoch vorzugsweise einstückig sein und ist sie besonders bevorzugt monolithisch (aus einem einzigen Material aufgebaut).

Wie bereits eingangs erläutert, ist das Aufsetzstück erfindungsgemäß auf ein Spitzende eines Rohrstücks gesetzt (an dessen entgegengesetzten Ende eine Muffe angeordnet ist). Das Aufsetzstück deckt das Spitzende dabei verzugsweise hinsichtlich der Abstandsrichtungen ab, das Spitzende liegt also zumindest bündig mit dem dem Kontaktabschnitt entgegengesetzten Ende des Aufsetzstücks. Bevorzugt kann sogar sein, dass das Spitzende innerhalb des Freihalteabschnitts liegt, also zu einer an das entsprechende Aufsetzstück-Ende gedachten, zur Leitungsrichtung senkrechten Ebene (an die dann ein Schalungselement grenzt) beabstandet, beispielsweise um mindestens 0,5 bzw. 1 cm. Eine entsprechende Beabstandung kann beispielsweise der in Leitungsrichtung genommenen Dicke eines vorstehend erläuterten Deckels eines Einsetzstücks entsprechen.

Ein Zwischenprodukt des erfindungsgemäßen Verfahrens ist ein Wand- oder Bodenelement, das durch Gießen von zunächst fließfähigem und dann erstarrtem Material hergestellt und in dem eine Leitungsanordnung vorgesehen ist. Das dann erstarrte Material, etwa auf Zement- oder auch synthetischer Basis, lagefixiert das Aufsetzstück und die Leitung. Das Einsetzstück wird dann herausgenommen; es wird von einem Spitzende abgenommen und ein Rohrstück mit Muffe auf dieses gesetzt. Vorzugsweise ist das ursprünglich fließfähige, dann erstarrte Material Mörtel oder besonders bevorzugt Beton.

Die Erfindung betrifft ferner die Verwendung eines Aufsatzstücks, das einen Kontaktabschnitt und einen Freihalteabschnitt aufweist, mit einem Einsetzstück in dem erfindungsgemäßen Verfahren

Bevorzugt ist ein Aufsetzstück, bei welchem das Einsetzstück als hinsichtlich des Abstandsvolumens durchgehender Vollkörper vorgesehen ist.

Bevorzugt ist ein Aufsetzstück, bei welchem das Einsetzstück um die Leitungsaußenfläche umlaufend als durchgehender Körper vorgesehen ist.

Bevorzugt ist ein Aufsetzstück, bei welchem das Einsetzstück als Schaumstoffteil vorgesehen ist.

Bevorzugt ist ein Aufsetzstück, bei welchem das Einsetzstück aus Polystyrolschaumstoff vorgesehen ist.

Bevorzugt ist ein Aufsetzstück, bei welchem das Aufsetzstück aus einem Gummimaterial vorgesehen ist.

Bevorzugt ist ein Aufsetzstück, das aus einem synthetischem Gummimaterial vorgesehen ist.

Bevorzugt ist ein Aufsetzstück, bei welchem das Dichtmaterial ein dem Freihalteabschnitt entgegengesetztes Ende des Formmaterial-Kontaktabschnitts umgreift und sich ein Stück weit außenseitig des Formmaterial-Kontaktabschnitts erstreckt. Bevorzugt ist ein Aufsetzstück, bei welchem das Spannmittel auf dem sich ein Stück weit außenseitig des Formmaterial-Kontaktabschnitts erstreckenden Teil des Dichtelements angeordnet ist.

Im Folgenden wird das erfindungsgemäße Verfahren des Aufsetzstücks anhand von Ausführungsbeispielen näher erläutert, wobei die einzelnen Merkmale im Rahmen des Schutzgegenstands der Ansprüche auch in anderer Kombination erfindungswesentlich sein können und in dieser Form offenbart sein sollen.
- Fig. 1: zeigt eine Schnittdarstellung einer ersten Variante des Aufsetzstücks.
- Fig. 2: illustriert ein jenem gemäß Fig. 1 entsprechendes Aufsetzstück, und zwar nach Herausnahme des Einsetzstücks und Verlängerung des einbetonierten Rohrstücks.
- Fig. 3: zeigt eine zweite Variante eines Aufsetzstücks.

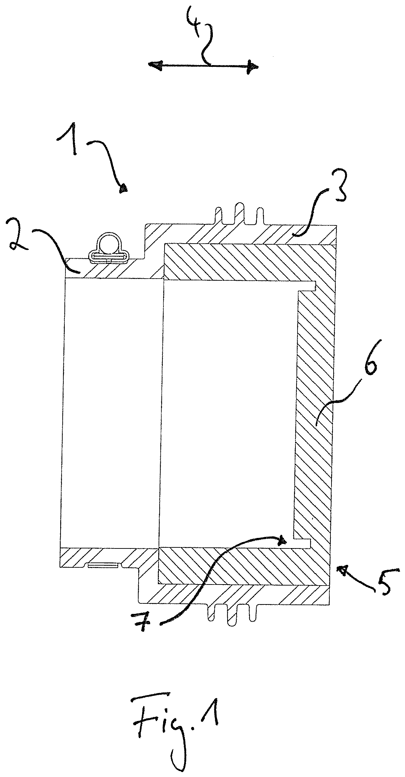

Fig. 1 zeigt ein Aufsetzstück 1 mit einem zur Anlage auf einer Leitungsaußenfläche vorgesehenen Kontaktabschnitt 2 und einem Freihalteabschnitt 3. Das Aufsetzstück 1 gemäß Fig. 1 ist monolithisch aus Ethylen-Propylen-Dien-Kautschuk (EPDM) durch Pressen hergestellt und hat eine Shore-Härte von ca. 55 Shore.

Das Aufsetzstück 1 hat eine in Längsrichtung 4 genommene Länge von 110 mm, wobei sich der Kontaktabschnitt über etwa 40 mm und der Freihalteabschnitt 3 über ca. 70 mm erstreckt. Im Bereich des Freihalteabschnitts 3 hat das Aufsetzstück 1 einen Innendurchmesser von 140 mm, wohingegen dieser im Bereich des Kontaktabschnitts 2 lediglich 111 mm beträgt und damit auf den Außendurchmesser eines KG-Rohrs DN100 abgestimmt ist.

Das Aufsetzstück 1 kann auf ein KG-Rohrstück aufgesetzt werden, und zwar auf dessen Spitzende, sodass dieses dann innerhalb des Freihalteabschnitts angeordnet ist. In dem Aufsetzstück 1, und zwar im Freihalteabschnitt 3 davon, ist ein Einsetzstück 5 angeordnet und darin in Längsrichtung 4 verschiebbar gehalten. Mit dem sich in Längsrichtung 4 erstreckenden, dann das Abstandsvolumen zwischen Leitungsaußenfläche und Innenwand des Freihalteabschnitts ausfüllenden Abschnitt des Einsetzstücks 5 ist einstückig ausgebildet ein Deckel 6 am Einsetzstück 5 vorgesehen.

Nach dem Aufsetzen des Aufsetzstücks 1 auf das Spitzende eines KG-Rohrs und dem Einsetzen des Einsetzstücks 5 verschließt der Deckel 6 das Spitzende. So kann beispielsweise einem Eindringen von Beton beim Vergießen oder generell einer Verschmutzung bzw. auch Beschädigung des Spitzendes vorgebeugt werden. Hinsichtlich der Längsrichtung 4 innenseitig ist am Einsetzstück 5 eine umlaufende Nut 7 zur Aufnahme des Spitzendes vorgesehen; das Einsetzstück 5 ist so sicher auf dem Spitzende gehalten.

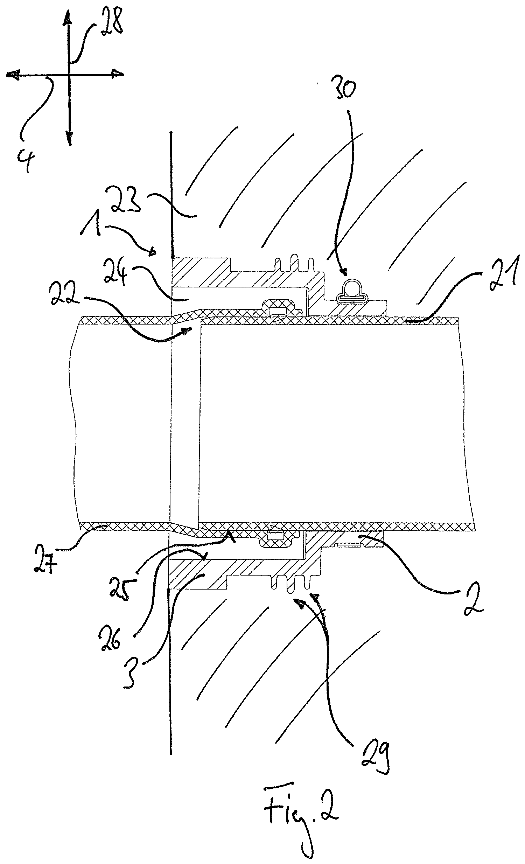

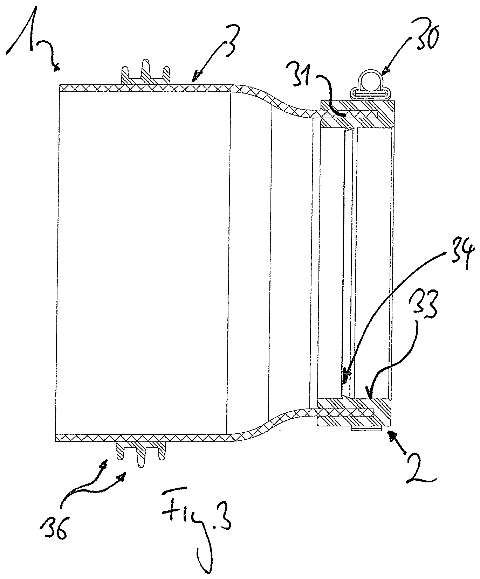

Ein entsprechendes Einsetzstück 5 kann selbstverständlich auch in die Aufsetzstücke 1 gemäß den Figuren 2 und 3 gesetzt werden.

Fig. 2 zeigt ein jenem anhand von Fig. 1 erläuterten prinzipiell entsprechendes Aufsetzstück 1, das auf das Spitzende 22 eines KG-Rohrs 21 gesetzt ist. Diesem entgegengesetzt (nicht dargestellt) ist an dem KG-Rohr 21 eine Muffe vorgesehen. Das KG-Rohr 21 ist über seine gesamte Länge, also von dem Spitzende 22 mit dem Aufsetzstück 1 bis zu der Muffe am entgegengesetzten Ende in das Wandelement 23 einbetoniert.

In der in Fig. 2 gezeigten Situation ist der Beton bereits ausgehärtet und sind zuvor das Wandelement 23 seitlich begrenzende Schalungselemente bereits entfernt. In das Abstandsvolumen 24 zwischen Leitungsaußenfläche 25 und Innenwand 26 des Freihalteabschnitts 3 war beim Einbetonieren noch das Einsetzstück 5 gesetzt, dessen Deckel 6 des Abstandsvolumens 24 und das Ende der Leitung 21 abgedeckt hat. Zugleich hat das Einsetzstück 5 das Aufsetzstück 1 gegen den Druck des noch nicht verfestigten Betons stabilisiert.

Nach dem Aushärten des Betons wurde das Einsetzstück 5 aus dem Aufsetzstück 1 genommen und zur Verlängerung das KG-Rohrstück 27 mit seinem Muffenende auf das KG-Rohr 21 aufgeschoben.

Um Kriechpfade entlang der bezogen auf die Abstandsrichtung 28 äußeren Oberfläche des Aufsetzstücks 1 zu verlängern, sind drei monolithisch mit dem übrigen Aufsetzstück 1 ausgebildete Stegdichtungen 29 vorgesehen. Diese erheben sich um ca. 15 mm (mittlere) bzw. 10 mm (äußere) von der Außenfläche weg und sind jeweils umlaufend vorgesehen.

Um auch einen Kriechpfad entlang der Leitungsaußenfläche 25 zu blockieren, wird das Aufsetzstück 1 von einer im Kontaktabschnitt 2 angeordneten Spannschelle 30 auf die Leitungsaußenfläche gedrückt. Dies stabilisiert das Aufsetzstück 1 zudem auch bereits beim Gießen des Wandelements 23; gemeinsam mit dem im Freihalteabschnitt 3 vorgesehenen Einsetzstück 5 wird es sicher in Position gehalten.

Fig. 3 zeigt eine weitere Variante eines Aufsetzstücks 1, und zwar ein im Zwei-komponenten-Spritzgussverfahren aus einem Formmaterial und einem weicheren Dichtmaterial einstückig hergestelltes Aufsetzstück 1. Das formgebende Formmaterial ist Acryl-Butadien-Styrol (ABS), und das Dichtmaterial ist ein thermoplastischer Elastomer. Das Formmaterial erstreckt sich vom Freihalteabschnitt 3 bis in den Kontaktabschnitt. Innenseitig des Formmaterial-Kontaktabschnitts 31 ist das Dichtmaterial 32 flächig angeformt, und es bildet zugleich eine flächige Anlage 33 zur Leitungsaußenfläche 25 hin. Innenseitig umlaufend ist eine Dichtlippe 34 angeformt.

Das Dichtmaterial 32 umgreift den Formmaterial-Kontaktabschnitt 31 und ist auch außenseitig davon vorgesehen. Durch die Spannschelle 30 kann der Kontaktabschnitt 2 und kann damit insbesondere die Anlagefläche 33 mit der Dichtlippe 34 auf die Leitungsaußenfläche 25 angedrückt werden.

Im Freihalteabschnitt 3 ist außenseitig umlaufend eine gleichzeitig mit dem Dichtmaterial 32 des Kontaktabschnitts 2 angeformte, außenseitig umlaufende Stegdichtung 36 vorgesehen. Die Stegdichtung 36 aus einem thermoplastischen Elastomer kann auch dann noch am Beton anliegen, wenn dieser beim Aushärten etwas schrumpft. Es können also wiederum Kriechwege entlang der Außenseite des Aufsetzstücks 1 verlängert bzw. blockiert werden.

## Patentansprüche

1. Verfahren zum Herstellen eines Wand- oder Bodenelements (23) durch Gießen von zunächst fließfähigem und dann erstarrendem Material, wobei vor dem Gießen eine Leitungsanordnung hergestellt wird, mit
einem Aufsetzstück (1), welches einen Kontaktabschnitt (2) und einen Freihalteabschnitt (3) aufweist,
einem Einsetzstück und
einer Leitung (21), welche die medienführende Leitung selbst ist, nämlich ein Rohrstück mit einer Muffe an dem einen Ende und einem Spitzende (22) an dem entgegengesetzten Ende,
bei welcher Leitungsanordnung das Aufsetzstück (1) im Bereich des Spitzendes (22) auf eine Außenfläche (25) der Leitung (21) gesetzt ist und mit dem Kontaktabschnitt (2) auf der Leitungsaußenfläche (25) anliegt, wobei der Kontaktabschnitt (2) mit einem Spannmittel auf die Leitungsaußenfläche (25) angedrückt wird, und wobei der Freihalteabschnitt (3) zu der Leitungsaußenfläche (25) beabstandet gemeinsam mit dieser ein Abstandsvolumen (25) begrenzt, in welches das Einsetzstück eingesetzt ist, um das Aufsetzstück (1) beim Vergießen zu stabilisieren,
wobei dann ferner, nach dem Gießen des Wand- oder Bodenelements (23) und Erstarren des zunächst fließfähigen Materials, das Einsatzstück von dem Spitzende (22) abgenommen und ein weiteres Rohrstück (27) mit Muffe auf das Spitzende (22) gesetzt wird.

2. Verfahren nach Anspruch 1, bei welchem an dem Einsetzstück ein einstückig damit ausgebildeter Deckel vorgesehen ist, der bei auf der Leitung (21) gesetztem Aufsetzstück (1) und eingesetztem Einsetzstück das Leitungsende und das Abstandsvolumen (24) abdeckt.

3. Verfahren nach einem der vorstehenden Ansprüche, bei welchem das Spannmittel eine Spannschelle ist.

4. Verfahren nach einem der vorstehenden Ansprüche, bei welchem an dem Aufsetzstück (1) eine sich von einer Außenfläche des Aufsetzstücks (1) in einer den Abstand zur Mittenachse der Leitung bestimmenden Richtung (28) weg erhebende, hinsichtlich der Mittenachse umlaufende Stegdichtung (29, 36) vorgesehen ist, vorzugsweise eine mit dem Aufsetzstück (1) einstückig ausgebildete Stegdichtung (29, 36).

5. Verfahren nach einem der vorstehenden Ansprüche, bei welchem das Aufsetzstück (1) eine Shore-Härte von nicht mehr als 70 Shore hat.

6. Verfahren nach einem der vorstehenden Ansprüche, bei welchem zumindest einer von dem Kontaktabschnitt des Aufsetzstücks und dem Einsetzstück einen Innendurchmesser von ca. 110 mm, 125 mm oder 160 mm hat.

7. Verfahren nach einem der vorstehenden Ansprüche, bei welchem das Aufsetzstück (1) aus mindestens zwei Materialien vorgesehen ist, wobei ein erstes formgebendes Formmaterial zumindest den Freihalteabschnitt (3) bildet und ein zweites, im Vergleich zum Formmaterial weicheres Dichtmaterial zumindest die für die Anlage auf der Leitung (21) vorgesehene Anlagefläche (33) des Kontaktabschnitts (2) bildet.

8. Verfahren nach Anspruch 7, bei welchem sich das Formmaterial des Aufsetzstücks (1) vom Freihalteabschnitt (3) bis in den Kontaktabschnitt (2) erstreckt und im Kontaktabschnitt als Formmaterial-Kontaktabschnitt (31) vorliegt, wobei das Dichtmaterial den Formmaterial-Kontaktabschnitt (31) innenseitig zumindest bereichsweise flächig bedeckt.

9. Verfahren nach Anspruch 7 oder 8, bei welchem das Formmaterial und das Dichtmaterial des Aufsetzstücks (1) einstückig vorgesehen sind, wobei das Aufsetzstück (1) vorzugsweise ein Zwei-Komponenten-Spritzgussteil ist.

10. Verwendung eines Aufsetzstücks (1), das einen Kontaktabschnitt (2) und einen Freihalteabschnitt (3) aufweist, mit einem Einsetzstück in einem Verfahren nach einem der vorstehenden Ansprüche.

## Claims

1. A method of manufacturing a wall or floor element (23) by pouring a material capable of flowing first and hardening then,
wherein a line arrangement is manufactured prior to said pouring, comprising
an attachment piece (1) which comprises a contact-section (2) and a keeping-clear-section (3),
an insertion piece and
a line (21) which is the medium guiding line itself, namely a tube piece with a sleeve at the one end and an insertion end (22) at the opposite end,
said attachment piece (1) being, in said line arrangement, placed on an outer surface (25) of said line (21) in a region at said insertion end (22) and contacting said outer surface (25) of said line with said contact-section (2), wherein said contact-section (2) is pressed with a tensioning member onto said outer surface (25) of said line, and wherein said keeping-clear-section (2) is spaced to said outer surface (25) of said line and defines a distance volume (24) together with said outer surface (25) of said line in which said insertion piece is inserted for stabilizing said attachment piece (1) during said pouring,
wherein further then, after said pouring of said wall or floor element (23) and the hardening of said material capable of flowing first, said insertion piece is removed from said insertion end (22) of said line and a further tube piece (27) having a sleeve is placed on said insertion end (22).

2. The method according to claim 1, wherein a lid is provided at said insertion piece, said lid being one-piece with said insertion piece, wherein said lid covers said line end and said distance volume (24) when said attachment piece (1) is placed on said line (21) and said insertion piece is inserted.

3. The method according to one of the preceding claims, wherein said tensioning member is a clamp.

4. The method according to one of the preceding claims, wherein a sealing projection (29, 36) extending from an outer surface of said attachment piece (1) in a direction defining the distance to the center axis of the line and extending circumferentially with respect to said center axis is provided at said attachment piece (1), preferably a sealing projection (29, 36) being one-piece with said attachment piece (1).

5. The method according to one of the preceding claims, wherein said attachment piece (1) has a Shore hardness of not more than 70 Shore.

6. The method according to one of the preceding claims, wherein at least one of said contact-section of said attachment piece and said insertion piece has an inner diameter of about 110 mm, 125 mm or 160 mm.

7. The method according to one of the preceding claims, wherein said attachment piece (1) is made of at least two materials, wherein a first shape defining shape material forms at least said keeping-clear-section (3) and a second sealing material softer in comparison to said shape material forms at least the contact area (33) of said contact-section (2), which is provided for said contact on said line (21).

8. The method according to claim 7, wherein said shape material of said attachment piece (1) extends from said keeping-clear-section (3) up into the contact-section (2), said shape material forming a shape-material-contact-section (31) in said contact-section, wherein said sealing material covers said shape-material-contact-section (31) at the inside at least in a region two-dimensionally.

9. The method according to claim 7 or 8, wherein said shape material and said sealing material of said attachment piece (1) are provided one-piece with each other, wherein said attachment piece (1) is preferably a two-component injection moulding part.

10. Use of an attachment piece (1), which comprises a contact-section (2) and a keeping-clear-section (3), together with an insertion piece in a method according to one of the preceding claims.

## Revendications

1. Procédé de fabrication d'un élément de paroi ou de sol (23) par coulage d'un matériau qui est tout d'abord fluide avant de se solidifier,
un agencement de conduite étant produit avant ledit coulage, ledit élément comprenant:
un élément de pose (1) présentant une section de contact (2) et une section de dégagement (3),
une pièce d'introduction, et
une conduite (21), consistant en soi en la conduite conductrice de matière, à savoir un tronçon de tuyau présentant une tête d'emboîtement à un bout et une extrémité mâle (22) au bout opposé;
dans cet agencement de conduite, l'élément de pose (1) est installé à proximité de l'extrémité mâle (22) sur une surface extérieure (25) de la conduite (21) et repose sur la surface extérieure de conduite (25) par sa section de contact (2), ladite section de contact (2) étant pressée sur la surface extérieure de conduite (25) par le biais d'un moyen de serrage, et ladite section de dégagement (3), éloignée de la surface extérieure de conduite (25), délimitant conjointement avec celle-ci un volume interstitiel (24) dans lequel la pièce d'introduction est introduite afin de stabiliser l'élément de pose (1) pendant le coulage,
en sachant qu'ensuite, après le coulage de l'élément de paroi ou de sol (23) et la solidification du matériau tout d'abord fluide, la pièce d'introduction est retirée de l'extrémité mâle (22) et un autre tronçon de tuyau (27) à tête d'emboîtement est placé sur l'extrémité mâle (22).

2. Procédé selon la revendication 1, dans lequel il est prévu, sur la pièce d'introduction, un couvercle constitué d'un seul tenant avec cette dernière, lequel recouvre l'extrémité de conduite et le volume interstitiel (24) une fois l'élément de pose installé sur la conduite (21) et une fois la pièce d'introduction introduite.

3. Procédé selon l'une quelconque des revendications précédentes, dans lequel le moyen de serrage est un collier de serrage.

4. Procédé selon l'une quelconque des revendications précédentes, dans lequel il est prévu un joint à lèvres (29, 36) sur l'élément de pose (1), lequel joint fait saillie à partir d'une surface extérieure de l'élément de pose (1) dans une direction (28) déterminant l'écart par rapport à l'axe médian de la conduite, en étant circonférentiel par rapport à l'axe médian, ledit joint à lèvres (29, 36) étant de préférence constitué d'un seul tenant avec l'élément de pose (1).

5. Procédé selon l'une quelconque des revendications précédentes, dans lequel l'élément de pose (1) présente une dureté Shore ne dépassant pas 70 Shore.

6. Procédé selon l'une quelconque des revendications précédentes, dans lequel la section de contact de l'élément de pose et/ou de la pièce d'introduction présente un diamètre intérieur d'environ 110 mm, 125 mm ou 160 mm.

7. Procédé selon l'une quelconque des revendications précédentes, dans lequel l'élément de pose (1) est réalisé en au moins deux matières, une première matière modelable constitutive formant au moins la section de dégagement (3) et une deuxième matière d'étanchéité, plus molle comparativement à la matière modelable, constituant au moins la surface de support (33) de la section de contact (2) prévue pour reposer sur la conduite (21).

8. Procédé selon la revendication 7, dans lequel la matière modelable de l'élément de pose (1) s'étend de la section de dégagement (3) jusque dans la section de contact (2) et existe dans la section de contact en tant que section de contact (31) en matière modelable, ladite matière d'étanchéité recouvrant superficiellement sur l'intérieur, au moins par portions, la section de contact (31) en matière modelable.

9. Procédé selon la revendication 7 ou 8, dans lequel la matière modelable et la matière d'étanchéité de l'élément de pose (1) sont prévues d'un seul tenant, ledit élément de pose (1) consistant de préférence en un élément moulé par injection à deux composants.

10. Utilisation d'un élément de pose (1) présentant une section de contact (2) et une section de dégagement (3) avec une pièce d'introduction suivant un procédé selon l'une quelconque des revendications précédentes.
